(19) **Europäisches Patentamt**
**European Patent Office**
**Office européen des brevets**

(11) **EP 2 287 633 B1**

(12) **FASCICULE DE BREVET EUROPEEN**

(45) Date de publication et mention
de la délivrance du brevet:
**24.04.2013 Bulletin 2013/17**

(51) Int Cl.:
**G01S 13/48** *(2006.01)*     **G01S 13/58** *(2006.01)*
**G01S 13/93** *(2006.01)*     **G01S 13/524** *(2006.01)*
**G01S 13/536** *(2006.01)*

(21) Numéro de dépôt: **10171149.7**

(22) Date de dépôt: **28.07.2010**

(54) **Radar de détection de cibles aériennes équipant un aéronef notamment pour l'évitement d'obstacles en vol**

Radar zur Erkennung von Luftzielen, der als Ausrüstung eines Luftfahrzeugs dient, insbesondere zur Hindernisumfliegung

Radar for the detection of aerial targets fitted on an aircraft, in particular for avoiding obstacles in flight

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **31.07.2009 FR 0903799**

(43) Date de publication de la demande:
**23.02.2011 Bulletin 2011/08**

(73) Titulaire: **Thales**
**92200 Neuilly Sur Seine (FR)**

(72) Inventeurs:
• **Cornic, Pascal**
**29200 Brest (FR)**
• **Garrec, Patrick**
**33700 Mérignac (FR)**
• **Kemkemian, Stéphane**
**75014 Paris (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2008/134815     FR-A1- 2 741 453**
**US-A- 3 787 853     US-A- 5 376 939**

• **BOMAR L C ET AL: "CW Multi-Tone Radar Ranging using DFT Techniques" EUROPEAN MICROWAVE CONFERENCE, 1983. 13TH, IEEE, PISCATAWAY, NJ, USA, 1 octobre 2006 (2006-10-01), pages 127-132, XP031061260**
• **LE CHAVALIER F: "Space-Time Transmission and Coding for Airborne Radars" LEIDA-KEXUE-YU-JISHU = RADAR SCIENCE AND TECHNOLOGY,, vol. 6, no. 6, 1 décembre 2008 (2008-12-01), pages 411-421, XP009130674 ISSN: 1672-2337**
• **MALMQVIST R ET AL: "On the Use of MEMS Phase Shifters in a Low-Cost Ka-band Multifunctional ESA on a Small UAV" MICROWAVE CONFERENCE, 2007. APMC 2007. ASIA-PACIFIC, IEEE, PISCATAWAY, NJ, USA, 11 décembre 2007 (2007-12-11), pages 1-4, XP031279994 ISBN: 978-1-4244-0748-4**

**Description**

La présente invention concerne un radar pour la détection de cibles aériennes équipant un aéronef, par exemple un drone. Elle s'applique notamment pour la détection et l'évitement d'obstacles en vol.

La réalisation d'une fonction radar de détection d'obstacles aériens non coopérative pour aéronefs, en particulier pour des drones, est essentielle pour permettre l'insertion d'aéronefs autopilotés dans le domaine aérien non ségrégué. Elle participe à la fonction de détection et d'évitement d'obstacles connue sous le nom de « Sense and Avoid ».

Un tel radar doit disposer d'un très large champ d'observation, typiquement ±120° en azimut et ±15° en élévation, et doit être capable de balayer l'espace en un temps très court, compte tenu du temps nécessaire pour engager une manoeuvre d'évitement en cas de risque de collision. Ces caractéristiques correspondent approximativement à la capacité d'observation de l'environnement d'un pilote « humain ».

Dans ces conditions, il est intéressant d'utiliser une antenne ou plusieurs antennes à champ large en émission, et de former en réception de multiples faisceaux simultanément dans le domaine éclairé.

Cependant, un problème est alors la détection des objets mobiles en vol, sur fond de fouillis de sol important, en particulier lorsque le faisceau d'antenne est relativement large et que le niveau des lobes secondaires est important. Plus l'altitude de l'aéronef est faible, plus ce problème devient compliqué à traiter.

Il y a donc une nécessité de définir un radar capable de détecter des aéronefs en vol présentant un risque de collision avec le porteur, quelles soient leurs vitesses de rapprochement. Par ailleurs, le volume, le poids et le coût d'un tel radar devraient également être réduits au maximum.

Il n'existe pas actuellement de dispositifs radar répondant à ce besoin. Il existe cependant des fonctions comparables notamment pour les avions d'armes, qui disposent de mode de détection air- air. Ces radars couvrent un domaine en distance plus étendu que ce qui est nécessaire dans la présente application définie précédemment, en revanche ils couvrent un domaine angulaire nettement plus réduit et avec une période de renouvellement plus longue.

Ces modes utilisent une antenne directive, qui scanne le domaine de surveillance de façon mécanique ou électronique, ce qui n'est pas compatible avec la présente application, compte tenu de l'amplitude du domaine à surveiller et du temps de rafraîchissement maximum, qui est de l'ordre de la seconde.

La détection s'effectue classiquement par détection de l'effet doppler, ce qui permet dans une certaine mesure de séparer les cibles du fouillis de sol. Ces modes sont connus sous les noms de HFR, MFR et BFR, correspondant respectivement aux modes d'émission à haute, moyenne et basse fréquence de récurrence. Ils sont amplement décrits dans la littérature.

Dans le mode HFR, la détection des cibles lentes en approche est limitée par la qualité des lobes secondaires de l'antenne et aggravé par le grand nombre de repliement en distance dans le domaine de recherche des cibles. Il existe des traitements pour minimiser ces gênes mais ils sont très compliqués. Dans le mode MFR, la détection à la fois des cibles lentes et des cibles rapides peut être affectée par le fouillis vu par les lobes secondaires d'antenne. Le traitement est complexe, du fait de la nécessité de gérer simultanément les ambiguïtés distance et les ambiguïtés vitesse. Comme précédemment des méthodes de traitement existent mais restent très lourdes en termes de mise en oeuvre.

Dans le mode BFR, les performances de détection en « look down » sont faibles du fait du grand nombre de repliement en vitesse, en particulier :

- Le fouillis de sol du lobe principal occupe la majeure partie du domaine en vitesse ambigu ;
- Il y a également risque de fausses alarmes sur véhicules au sol du fait des ambiguïtés en vitesse qui mélangent les véhicules lents et rapides.
- Les ambiguïtés doppler sont complexes à lever.
- Enfin, ce type de mode nécessite une puissance crête élevée.

En tout état de cause, les solutions mises en oeuvre sur avion d'armes ne peuvent être appliquées directement sur un avion autopiloté, compte tenu de l'amplitude du domaine angulaire à explorer et également pour des raisons évidentes de coût.

Par ailleurs, les domaines de vitesse et de portée pour l'application détection et évitement d'obstacle sont différents de ceux des modes air/air pour avion d'armes.

Un document US 3 787 853 A décrit un système radar apte à détecter des cibles aériennes.

Un but de l'invention est notamment de permettre la réalisation d'un radar capable de détecter des aéronefs en vol présentant un risque de collision avec le porteur dudit radar, quelque soit les vitesses de rapprochement en jeu, de façon économique. A cet effet, l'invention a pour objet un Dispositif radar de détection de cibles aériennes porté par un aéronef, le dispositif comportant des moyens d'émission d'une onde hyperfréquence en direction d'une cible, ladite onde ayant une double forme, une première forme l'onde étant composée d'au moins deux sinusoïdes de fréquences différentes émises simultanément, le radar comportant des circuits de réception recevant les signaux réfléchis par la cible et des moyens d'analyse effectuant la détection de la cible à partir des signaux reçus.

La deuxième forme d'onde est du type à impulsions.

La forme d'onde émise est fonction de la vitesse relative de la cible par rapport au porteur et de la vitesse absolue du porteur.

Dans un mode de réalisation possible, la première forme d'onde est émise lorsque la vitesse relative de la cible est supérieure à la vitesse absolue du porteur. De même, la deuxième forme d'onde peut être émise lorsque la vitesse relative de la cible est inférieure à la vitesse absolue du porteur. Dans un mode de réalisation possible, la première forme d'onde utilise un nombre N sinusoïdes de fréquences différentes, l'onde émise étant composée d'un couple de deux sinusoïdes émises simultanément, les couples de sinusoïdes étant modifié séquentiellement, ledit dispositif comportant des moyens de traitement effectuant une levée d'ambiguïté en distance à partir des phases différentielles associées aux couples de sinusoïdes.

Dans un autre mode de réalisation possible, la première forme d'onde est composée de N sinusoïdes de fréquences différentes émises simultanément, ledit dispositif comportant des moyens de traitement calculant les phases différentielles associées à chaque couple de sinusoïdes constitué parmi les N sinusoïdes émises et effectuant une levée d'ambiguïté en distance à partir de ces phases différentielles.

Les impulsions de la deuxième forme d'onde sont par exemple codées en fréquence.

Une récurrence peut comporter une suite d'impulsions codées chacune selon une fréquence distincte. La durée de récurrence est par exemple adaptée en permanence en fonction de la vitesse du porteur.

La durée de récurrence peut être adaptée en permanence en fonction du temps de réaction du porteur pour éviter une collision avec la cible. L'émission étant réalisée sur un ou plusieurs faisceaux fixes, la réception s'effectue par exemple en formation de faisceau par le calcul.

L'émission de N sinusoïdes simultanées est par exemple effectuée par N amplificateurs affecté chacun à une sinusoïde, chaque amplificateur étant par exemple relié à une antenne d'émission distincte.

D'autres caractéristiques et avantages de l'invention apparaîtront à l'aide de la description qui suit faite en regard de dessins annexés qui représentent :

- la figure 1, une illustration d'un aéronef, par exemple un drone, porteur d'un radar selon l'invention en présence d'un autre aéronef cible ;
- la figure 2, un exemple d'une première forme d'onde d'un radar selon l'invention, adaptée à un premier domaine de vitesses relatives entre le porteur et une cible ;
- la figure 3, un schéma synoptique d'un exemple de radar selon l'invention ;
- les figures 4a et 4b, d'autres exemples de la première forme d'onde précitée ;
- la figure 5, un exemple d'une deuxième forme d'onde adaptée à un deuxième domaine de vitesses relatives.

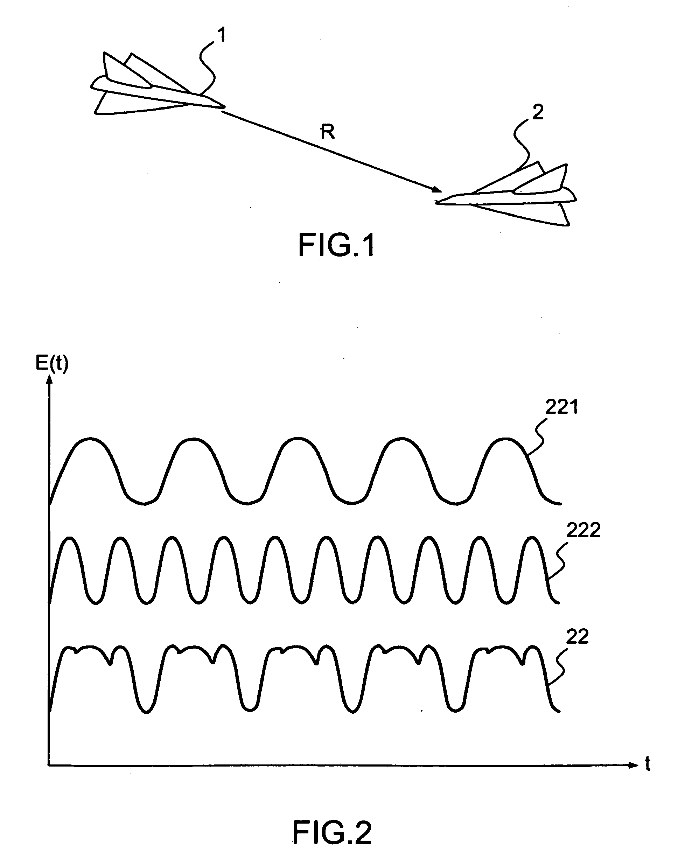

La figure 1 illustre un aéronef 1, par exemple un drone, porteur d'un radar selon l'invention en présence d'un autre aéronef 2, situé à une distance R, dans une situation où un risque potentiel de collision entre les deux aéronefs existe.

Un radar selon l'invention effectue les opérations suivantes :

- Différentiation et dimensionnement du domaine de détection distance et vitesse du radar en fonction des vitesses du porteur 1 et des cibles visées 2, de l'altitude du porteur et du temps de préavis minimum pour éviter la collision
- Segmentation du domaine distance/vitesse de façon à traiter séparément les zones ou les cibles apparaissent en contraste sur le clutter de sol, des zones où les cibles apparaissent en contraste sur le bruit interne du récepteur radar.
- Adaptation dynamique de la forme d'onde du radar en fonction à la fois de la vitesse et de l'altitude du porteur, de façon à optimiser la probabilité de détection en fonction du contexte

Dans ces conditions, l'exploitation des ressources radar est optimisée en permanence et les capacités de détection des cibles sont accrues, notamment à basse altitude.

Deux domaines de vitesse peuvent notamment être considérés. Un premier domaine est le domaine dit « exo-clutter », c'est à dire le domaine en vitesse de cible, dans lequel une analyse Doppler de type « MTI » classique, connue de l'homme du métier, place systématiquement la cible en dehors de la zone Doppler du clutter de sol lorsqu'une forme d'onde sans ambiguïté de vitesse est utilisée. Ce domaine correspond à des cibles plutôt rapides et pouvant entrer en collision avec le porteur 1. Plus précisément, les vitesses vérifient la condition suffisante suivante :

$$VRR_{CIBLE} > V_{PORTEUR} \qquad (1)$$

$V_{PORTEUR}$ étant le module de la vitesse du porteur par rapport à un référentiel fixe au sol, c'est-à-dire la vitesse absolue du porteur, et $VRR_{CIBLE}$ étant la vitesse radiale relative de la cible par rapport au porteur. Elle est positive dans le cas d'un rapprochement et seul le cas où cette vitesse est positive est à considérer dans le cas d'un évitement d'obstacle.

Typiquement, la vitesse maximum du porteur 1 est par exemple $V_{PORTEUR}$ = 100 m/s, et la vitesse maximum de la cible 2, par rapport au sol, est par exemple Vr = 300 m/s, ce qui donne une vitesse de rapprochement maximum VRRmax = 400 m/s.

Pour ces cibles, il faut que le radar du porteur 1 détecte suffisamment loin pour éviter une collision.Typiquement, le temps minimum de préavis Tp dans le cas le plus défavorable correspondant à un aéronef peu agile, est Tp =22 secondes, ce qui conduit à une portée minimum de l'ordre de 6 NM.

Il s'agit donc là de privilégier le bilan de portée en utilisant le maximum de puissance disponible. En d'autres termes, il importe de garantir un rapport signal sur bruit thermique supérieur à une certaine valeur minimale dans tout le domaine distance d'intérêt.

La puissance hyperfréquence disponible pour l'émission, à définition antennaire donnée, est dimensionnée par rapport à ce domaine vitesse, en correspondance avec l'exigence de portée minimum, 6 NM par exemple.

La séparation des cibles, qui ne sont pas séparées par des critères angulaires liés à la sélectivité du système antennaire, peut s'effectuer par l'effet doppler, à condition que le temps d'intégration cohérent soit suffisant. Par exemple, un temps d'intégration de 50 ms conduit à une résolution doppler de 20 Hz et à un pouvoir séparateur de 0,32 m/s en bande X, ce qui est suffisant, en se limitant à des scénarios multi-cibles réalistes.

A contrario, la résolution distance n'est pas un critère dimensionnant. De même, une précision de mesure en distance médiocre peut convenir (classe 100 m) dans la mesure où une relative imprécision sur la distance n'a pas d'impact sur la prise de décision de changement de trajectoire, visant à éviter la collision.

Un deuxième domaine à considérer est le domaine endo-clutter, c'est à dire le domaine pour lequel la vitesse relative des cibles 2 est inférieure à la vitesse du porteur 1 et pour lequel, aucune forme d'onde des modes BFR, MFR ou HFR définis précédemment ne peut permettre de placer la cible sur le fond de bruit thermique seul du radar. La relation suivante est alors vérifiée :

$$VRR_{CIBLE} < V_{PORTEUR} \qquad\qquad (2)$$

avec les mêmes notations que pour la relation (1).

Pour ces cibles, en considérant les valeurs typiques qui précèdent, la vitesse de rapprochement maximum est de VRR = 100 m/sec et le besoin en portée minimum qui en découle est de 2200 m.

Dans ce domaine, le bilan de portée n'est plus l'élément dimensionnant, et il importe de diminuer la puissance de clutter interceptée par le radar en minimisant la cellule de résolution distance et vitesse, les carcactéristiques de l'antenne ayant été définies par ailleurs.

D'autre part, en dessous d'une certaine distance correspondant au temps de réaction minimum pour éviter l'obstacle, la détection devient inutile, ce qui limite encore le domaine distance instrumenté dans ce mode. Par exemple, en estimant ce temps à 5 secondes, une zone aveugle de 500 m peut être acceptée.

Selon l'invention, pour chacun des deux domaines de vitesse caractérisés ci-dessus par les relations (1) et (2), on définit une forme d'onde et un traitement correspondant décrits par la suite.

La figure 2 présente un exemple de forme d'onde adaptée aux cibles 2 dont la vitesse relative est supérieure à la vitesse du porteur 1 du radar. La vitesse de la cible est par exemple déterminée classiquement par une analyse de fréquence Doppler, la vitesse du porteur étant captée par ailleurs et transmise aux moyens de traitement du radar.

Pour ce premier domaine, on choisit une forme d'onde non ambigüe en fréquence Doppler de façon à éliminer les repliements spectraux pour garantir une visibilité des cibles en contraste sur bruit thermique avec un facteur de forme le plus élevé possible.

La forme d'onde est sinusoïdale à N fréquences, la figure 2 illustrant le cas où N = 2. La figure 2 présente donc un exemple où des fréquences F1 et F2 sont émises simultanément. La forme d'onde E(t) est alors représentée par une courbe 22 qui est la somme d'une sinusoïde de fréquence F1 et d'une sinusoïde de fréquence F2. Sur la figure 2, pour une raison de lisibilité les sinusoïdes sont décalées par rapport à la valeur zéro représentée par l'axe des temps t. Dans la réalité, elles seraient à moyenne nulle. Ce cas à deux fréquences peut être généralisé à N fréquences.

En ce qui concerne l'onde résultante 22, une forme d'onde continue à faible bande instantanée est choisie. Le temps d'intégration cohérent est déterminé pour satisfaire deux critères contradictoires :

- Il doit être le plus grand possible pour obtenir une meilleure sensibilité et un meilleur pouvoir séparateur en vitesse (largeur de filtre Doppler minimale) ;
- Il ne doit pas excéder le temps de stationarité des cibles observées vis à vis des fluctuations posibles de phase et d'amplitude du signal reçu, liées notamment aux mouvements relatifs. Autrement dit, le mouvement de la cible

EP 2 287 633 B1

n'étant jamais, ni parfaitement constant, ni réduit au mouvement d'un seul point brillant, l'étalement spectral qui en résulte doit rester en dessous de la bande passante d'un filtre Doppler. Il est possible d'excéder cette durée, mais des pertes significatives apparaissent.

Typiquement, ce temps est de l'ordre de 50 ms pour un radar en bande X, ce qui correspond à une discrimination doppler de l'ordre de 0,3 m/s en bande X.

Afin d'estimer la distance des cibles détectées, la forme d'onde radar est modulée en phase ou en fréquence, une modulation en amplitude étant notamment exclue puisque l'on souhaite profiter du maximum de puissance disponible en permanence.

Les solutions classiques basées sur de la modulation par code de phase ou de fréquence, du type FSK ou « chirp », dans le temps d'intégration cohérent ne conviennent pas. En effet, elles introduisent des ambiguités en distance complexes à éliminer, compte tenu du domaine distance/vitesse à traiter, de l'ordre de 6 NM x 400m/s en règle générale.

Comme indiqué précédemment, selon l'invention le radar émet simultanément pendant le temps d'intégration cohérent deux signaux sinusoïdaux espacés en fréquence, l'un à une première fréquence F1 et l'autre à une deuxième fréquence F2, l'espacement entre ces fréquences $\Delta F = |F1 - F2|$ respectant les conditions suivantes :

- Etre suffisamment faible pour que la fréquence doppler des échos reçus puisse être considérée comme égale pour ces deux fréquences ;
- Etre suffisamment large pour que les signaux reçus des cibles provenant des deux composantes spectrales à F1 et à F2 puissent être séparés sans ambiguïté en deux voies de traitement, compte tenu du décalage Doppler des cibles ou du fouillis de sol qui n'est pas connu a priori. On se fixe toutefois un intervalle maximal pour cet effet Doppler. Cet intervalle est déterminé a priori en considérant les plages de vitesses « plausibles » des cibles et du porteur du radar.
- Etre suffisamment large pour qu'une mesure distance soit possible à partir d'une mesure de phase différentielle en réception, et ce, avec une précision acceptable.
- Etre suffisamment faible pour que les ambiguïtés inhérentes à toutes mesures de phase puissent être gérées correctement (voir la forme d'onde utilisée plus loin).

Il est à noter que l'invention est décrite pour une application à deux fréquences simultanées, mais qu'elle peut être étendue à une application à N fréquences discrètes émises simultanément.

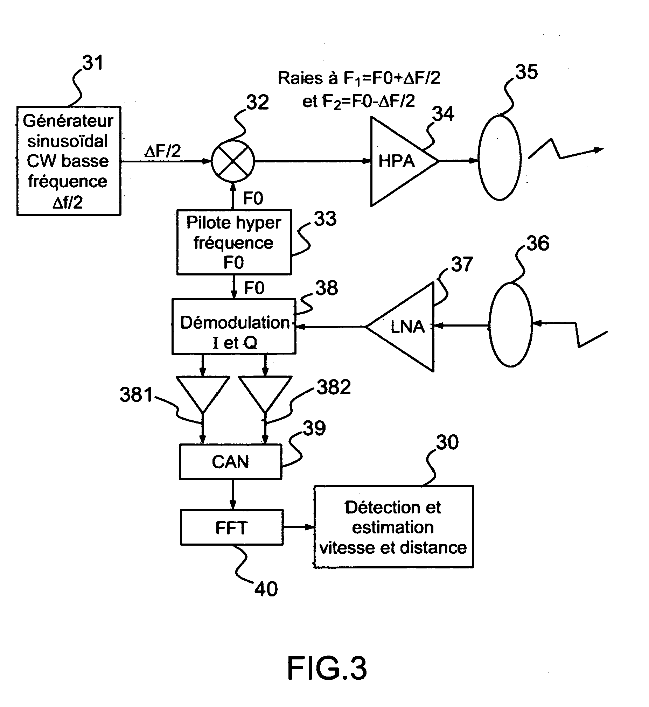

La figure 3 présente, par un schéma synoptique, un exemple de réalisation d'un radar selon l'invention. Il comporte par exemple un générateur 31 d'onde sinusoïdale continue basse fréquence $\Delta F/2$. Le signal fourni par ce générateur 31, à fréquence $\Delta F/2$ est transposé à la fréquence F1 et à la fréquence F2, où :

- F1 = F0 + $\Delta F/2$ ;
- F2 = F0 - $\Delta F/2$.

A cet effet, un mélangeur 32 reçoit sur une entrée le signal à $\Delta F/2$ issu du générateur 31 et reçoit sur une autre entrée un signal à la fréquence F0 issu d'un pilote hyperfréquence 33. Le mélangeur 32 fournit en sortie des signaux sinusoïdaux aux fréquences F1 et F2. Les signaux basse puissance fournis par le mélangeur 33 sont amplifiés par une chaine d'amplification de puissance 34, les signaux amplifiés étant fournis à une antenne d'émission 35 qui émet un signal à deux fréquence F1 et F2.

A la réception, les signaux sont captés par une antenne de réception 36 qui peut être la même que l'antenne de réception à condition de prévoir des circuits d'isolation, non représentés, entre les voies d'émission et de réception. Les signaux reçus sont amplifiés, en sortie d'antenne 36, par un amplificateur faible bruit 37. La sortie de l'amplificateur est reliée à un circuit de démodulation 38.

Le récepteur radar traite séparément les deux sinusoides bruitées reçues dans deux voies, filtrées respectivement autour de F1 et autour de F2. Ce filtrage peut être analogique ou numérique. On effectue ensuite, dans chacune des deux voies respectives, une démodulation cohérente 38 pour former, analogiquement ou numériquement, deux voies I et Q, 381, 382. Il est à noter que, moyennant certaines contraintes supplémentaires sur le choix des paramètres de la forme d'onde, une démodulation ne fournissant que le signal réel « I » est possible.

Les deux signaux issus des deux voies I, Q sont par exemple numérisés au moyen d'un convertisseur analogique-numérique 39. Une analyse spectrale est alors effectuée, par exemple par transformée de Fourier 40, sur chacunes des voies relatives respectivement à F1 et à F2.

En cas de présence d'une cible, les analyses spectrales sur les voies F1, respectivement F2, fournissent une raie à la fréquence $F_D - \Delta F/2$ sur la voie F1 et, respectivement à la fréquence $F_D + \Delta F / 2$ sur la voie F2. Ces deux raies spectrales sont d'amplitudes voisines, aux bruits et tolérances sur les circuits près.

Si ces deux raies vérifient certaines conditions de détection, une cible est déclarée « détectée » par des moyens de détection 30. Cette cible est caractérisée, notamment, par la fréquence Doppler $F_D$ et la phase différentielle entre ces deux raies :

$$\Delta\Phi = \frac{4\pi.\Delta F}{c}R + \Phi_0 \quad \mathrm{mod} \quad 2\pi \qquad (3)$$

où :

- $F_D$ représente la fréquence doppler de la cible considérée ;
- R la distance de la cible considérée 2 par rapport au porteur 1 ;
- c la vitesse de la lumière ;
- $\Delta F$ l'écart entre les fréquences F1 et F2.

$\Phi_0$ est un terme de « phase à l'origine ». Selon la méthode de réalisation de la chaîne hyperfréquence, il est nul ou bien il nécessite d'être calibré périodiquement. Dans ce dernier cas, les méthodes sont supposées connues, elles consistent par exemple à réinjecter durant des séquences de calibration le signal émis directement dans le récepteur, avec une distance nulle. Dans la suite de la description on suppose donc que $\Phi_0 = 0$.

De la mesure de la phase différentielle selon la relation précédente (3), on en déduit une estimation la distance de la cible :

$$R = \Delta\Phi\frac{c}{4\pi.\Delta F} \qquad (4)$$

La mesure de phase étant à modulo $\pi$ près, la mesure de distance est donc également ambiguë à $\dfrac{c}{2.\Delta F}$ près.

Il a été vu précédemment que l'écart de fréquence $\Delta F$ doit être supérieur à la bande de fréquences Doppler des cibles pour pouvoir séparer de manière certaine les canaux relatifs à F1 et à F2. Les valeurs typiques de vitesse relative VRR de la cible mentionnées précédemment, à elle seules justifient un écart $\Delta F$ qui rend forcément ambiguë la mesure de distance dans le domaine considéré, de l'ordre de 6NM.

D'autre part, plus $\Delta F$ est élevé, plus la mesure de distance est localement précise, à bruit de phase donné, mais plus la mesure risque d'être ambiguë.

Il est donc nécessaire de lever ces ambiguïtés. Pour cela, on utilise N couples de fréquences espacés de $\Delta F_i$ avec $i \in [1,N]$, où N est supérieur à1.

Ces couples de fréquences peuvent être émis :

- Soit séquentiellement ;
- Soit simultanément.

Chacune des deux solutions présente en effet, certains avantages mais aussi certains inconvénients. Il est aussi possible d'imaginer des solutions qui hybrident ces deux modes de fonctionnement.

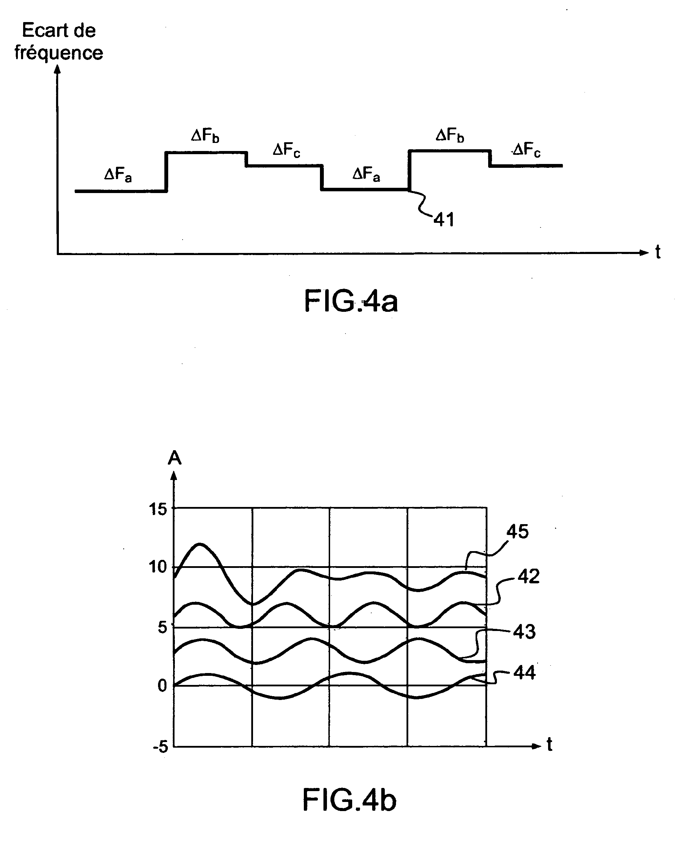

Les figures 4a et 4b illustrent respectivement l'émission de couples de fréquences séquentiels et l'émission de couples de fréquences simultanés, ces couples étant utilisés pour lever l'ambiguïté en distance. Pour illustrer l'émission de ces couples, on se place dans un cas d'application à trois fréquences, c'est-à-dire le cas où N = 3.

Dans le cas de la figure 4a, le radar émet toujours deux fréquences simultanément, mais le couple de fréquences est modifié séquentiellement. Ainsi, le radar émet simultanément des fréquences F1 et F2, puis émet simultanément la fréquence F1 et une fréquence F3 et enfin émet simultanément les fréquences F2 et F3 avant de reprendre l'émission simultanée de F1 et F2, et ainsi de suite.

Plus particulièrement, la fréquence 4a illustre par une courbe 41 l'écart de fréquence en fonction du temps, cet écart prenant successivement les valeurs $\Delta Fa$, $\Delta Fb$ et $\Delta Fc$ correspondant aux trois couples de fréquences émis successivement, et cela de façon cyclique, où :

- $\Delta Fa = F1 - F2$ ;
- $\Delta Fb = F1 - F3$ ;

- ΔFc = F2 - F2.

La figure 4b représente par trois courbes les trois sinusoïdes émises simultanément ainsi que l'onde résultante par une courbe 45. Pour des raisons de lisibilité, les sinusoïdes sont représentées décalées bien qu'elles seraient à moyenne nulle dans la réalité. Dans ce cas le signal reçu, correspondant à l'émission du signal total 45, est d'abord séparé en trois voies. A cet effet, les intervalles entre chacune des trois séquences sont supérieurs à la fréquence Doppler $F_D$ maximale à prendre en compte.

Une fois les voies séparées, on calcule les phases différentielles en constituant des couples :

- ΔFa = F1 - F2 ;
- ΔFb = F1 - F3 ;
- ΔFc = F2 - F2.

Les phases différentielles associées à ces couples sont ensuite utilisées de manière similaire au cas séquentiel relatif à la figure 4a.

Un intérêt du mode simultané par rapport au mode séquentiel est qu'il permet de lever l'ambiguïté sur un temps réduit. Il n'est pas nécessaire d'attendre l'émission de toutes les fréquences. Ce temps réduit permet par exemple de réaliser la diversité de fréquence sur la valeur moyenne du n-uplet (F1, F2, F3, ... FN) dans un cas général à N fréquences. Cela a notamment comme avantage de réduire l'effet de la fluctuation de la surface équivalente radar SER de la cible 2 et d'obtenir une détection plus stable. Une méthode de levée d'ambiguïté est notamment décrite dans la demande de brevet français n° 09 00241 déposée le 29 janvier 2009.

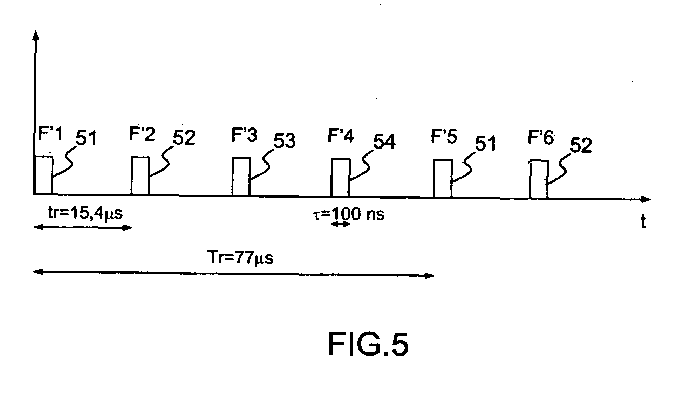

La figure 5 présente une forme d'onde, à impulsions, adaptée aux cibles 2 dont la vitesse relative est inférieure à la vitesse du porteur 1. Pour ce second domaine de fonctionnement, la portée recherchée Rmax et la distance à instrumenter sont également données par la relation suivante :

$$\text{Rmax} = \text{Vp.T} \qquad\qquad (5)$$

où T est le temps de réaction nécessaire pour éviter une collision.

En reprenant, à titre d'exemple, les valeurs typiques :

- T est égal à 22 secondes pour le cas le plus défavorable, la distance à instrumenter est alors Rmax = Vpmax.T = 2200 m, ce qui correspond à un temps de propagation aller retour de $\tau$ = 2Rmax/C=14,6 $\mu$s.
- T est égal à 5 secondes pour le cas le plus favorable, la zone aveugle peut s'étendre jusque Rmin=Vpmax.T = 500 m pour un porteur à 100 m/s, ce qui correspond à un temps de propagation aller retour de $\tau$ = 2Rmax/C = 3,33 $\mu$s.

La portée recherchée étant plus faible que dans le premier mode de fonctionnement décrit plus haut, et la puissance crête du radar ayant été dimensionnée pour le premier mode, le facteur de forme peut-être dégradé dans le rapport des portées visées à la puissance 4, soit par exemple $(2200/12964)^4$= 8,4 $10^{-4}$, en reprenant les valeurs typiques énoncées précédemment.

La puissance à émettre dans ce deuxième mode n'est donc pas un élément dimensionnant, et une forme d'onde pulsée à facteur de forme modéré peut être utilisée avantageusement.

Afin de minimiser la puissance de clutter de sol dans la cellule de confusion du radar, on choisit une forme d'onde non ambiguë en doppler sur la bande de clutter. Avantageusement, la durée de récurrence est par exemple adaptée en permanence en fonction de la vitesse du porteur. Elle est également par exemple adaptée au temps de réaction du porteur pour éviter une collision.

Pour une vitesse de porteur Vp, la fréquence de récurrence Fr du radar est alors supérieure à la valeur de récurrence minimum Frmin=4Vp/$\lambda$, le clutter de sol étant réparti entre les fréquences -2Vp/$\lambda$ et +2Vp/$\lambda$.

En reprenant les valeurs typiques, par exemple Vpmax=100 m/sec, il s'ensuit que Frmin>12500 Hz. La durée de récurrence maximum Trmax est alors égale à 80 $\mu$s.

On choisit par exemple Tr = 77 $\mu$s ce qui correspond à une distance ambiguë cTr/2=11550 m, c étant la vitesse de la lumière.

Le domaine de distance à instrumenter étant faible devant la distance d'ambiguïté, il est alors possible de peupler la récurrence de durée Tr de plusieurs impulsions 51, 52, 53, 54.

Ces impulsions sont espacées d'un temps tr voisin du temps de propagation correspondant à la limite du domaine instrumenté dans l'objectif d'optimiser le bilan de portée du radar.

Les impulsions 51, 52, 53, 54 sont codées en fréquence afin de maintenir une distance d'ambiguïté la plus lointaine possible. Dans l'exemple de la figure 5, quatre fréquences sont utilisées. A l'intérieur d'une période de récurrence Tr couvrant ces quatre fréquences, la première impulsion est codée à une fréquence F'1, la deuxième impulsion est codée à une fréquence F'2, la troisième impulsion est codée à une fréquence F'3 et la quatrième impulsion est codée à une fréquence F'4. Le nombre de fréquences utilisé peut être égal à 1 ou à une autre valeur entière supérieure à 1, cette valeur dépendant notamment du compromis recherché entre la puissance moyenne et le domaine utilisable.

Sur cette base, en adaptant le traitement en réception, à la période de récurrence tr où la fréquence d'émission est Fi, ne sont détectées que les impulsions reçues à la fréquence Fi. A titre d'exemple, on peut choisir tr = 15,4 μs dans un schéma à 4 fréquences. L'ambiguïté distance est rejetée à une distance correspondant à un temps de propagation de 4 tr et les échos ambigus sont atténués dans un rapport $4^4$ soit 24 dB par rapport aux échos non ambigus en limite du domaine instrumenté, ce qui est suffisant.

La largeur d'impulsion est choisie la plus grande possible, sa valeur maximum étant bornée par la distance aveugle acceptable, soit 3,33 μs pour un porteur à 100 m/s par exemple. Afin de réduire la puissance de clutter interceptée par le radar, la compression d'impulsion, par exemple « chirp », peut être utilisée.

Une bande de modulation de l'ordre de 10 MHz, conduisant à une résolution de 15 m, peut être utilisée.

Globalement, cette optimisation de la forme d'onde permet d'accroître la sensibilité du radar et ainsi de détecter des cibles lentes de très faibles surface équivalente radar, SER, à basse altitude :

- Le facteur de forme est optimisé pour maximiser la puissance moyenne émise, donc la sensibilité
- La cellule de résolution radar est réduite au maximum, ce qui réduit la puissance du fouillis de sol et augmente la capacité de détection des cibles à très faible vitesse
- Les ambiguïtés distance et vitesses sont rejetées facilement

Cette deuxième forme d'onde illustrée par la figure 5 et le traitement associés peuvent être implémentés conformément au synoptique des figures de la figure 3 en y ajoutant un dispositif de modulation du pulse d'émission, et éventuellement un dispositif de compression d'impulsion. D'autres formes d'ondes peuvent être utilisées, en dehors d'une onde à impulsion, pour le deuxième domaine correspondant aux vitesses relatives de cibles inférieures à la vitesse du porteur.

Avantageusement, la forme d'onde est adaptée en permanence en fonction de la vitesse et de l'altitude du porteur, et de la position et de la vitesse relative de la cible. Cette adaptation est aussi fonction du temps de réaction du porteur pour éviter une collision.

En ce qui concerne le schéma synoptique de la figure 3, celui-ci peut être complété par un étage de formation de faisceau par le calcul dans les circuits de réception dans le cas d'un radar à formation de faisceau de calcul à la réception. Dans ce cas, l'émission peut être avantageusement réalisée sur un ou plusieur faisceaux fixes de large ouverture.

La partie émission de ce schéma synoptique utilise un mélangeur analogique 32 équilibré pour générer deux fréquences symétriques autour d'une valeur moyenne F0, ces deux fréquences étant contenues dans le même signal qui est ensuite amplifié à une puissance nécessaire. Ce système simple peut néanmoins avoir certains inconvénients :

- il utilise un composant analogique, mélangeur équilibré, où l'on peut trouver en sortie des résidus de la fréquence centrale F0 ;
- il ne permet pas de réaliser la forme d'onde simultanée avec trois fréquences ou plus ;
- il oblige l'amplificateur de puissance 34 à travailler sur un signal non constant en amplitude, ce qui nuit à son rendement et peut induire divers effets parasites gênants.

Une solution alternative est par exemple d'émettre séparément N signaux sinusoïdaux de fréquences distinctes, N étant supérieur ou égal à 2. Cette génération multiple peut être réalisée par des systèmes de synthèse numérique. De même, il peut être intéressant d'amplifier en puissance ces N signaux sinusoïdaux séparément. Les amplificateurs de puissance peuvent alors fonctionner en régime non linéaire ou saturé. Enfin, pour éliminer les pertes d'un système de sommation en puissance, le radar peut émettre ces N signaux sinusoïdaux amplifiés par N antennes, chacune étant affectée à un amplificateur.

**Revendications**

1. Dispositif radar de détection de cibles aériennes (2) porté par un aéronef (1), ledit dispositif comportant des moyens d'émission d'une onde hyperfréquence en direction d'une cible (2), ladite onde (22, 45, 51, 52, 53, 54) ayant une double forme, une première forme d'onde (22, 45) étant composée d'au moins deux sinusoïdes (221, 222) de fréquences différentes (F1, F2) émises simultanément, le radar comportant des circuits de réception recevant les signaux réfléchis par la cible et des moyens d'analyse effectuant la détection de la cible à partir des signaux reçus, **caractérisé en ce que** la deuxième forme d'onde est du type à impulsions (51, 52, 53, 54), la forme d'onde émise étant fonction de la vitesse relative de la cible (2) par rapport au porteur et de la vitesse absolue du porteur (1).

2. Dispositif radar selon la revendication 1, **caractérisé en ce que** la première forme d'onde (22, 45) est émise lorsque la vitesse relative de la cible (2) est supérieure à la vitesse absolue du porteur (1).

3. Dispositif radar selon la revendication 1, **caractérisé en ce que** la deuxième forme d'onde (51, 52, 53, 54) est émise lorsque la vitesse relative de la cible (2) est inférieure à la vitesse absolue du porteur (1).

4. Dispositif radar selon l'une quelconque des revendications précédentes, **caractérisé en ce que** la première forme d'onde utilise un nombre N sinusoïdes de fréquences différentes, l'onde émise étant composée d'un couple de deux sinusoïdes émises simultanément, les couples de sinusoïdes étant modifié séquentiellement, ledit dispositif comportant des moyens de traitement effectuant une levée d'ambiguïté en distance à partir des phases différentielles associées aux couples de sinusoïdes.

5. Dispositif radar selon l'une quelconque des revendications 1 à 3, **caractérisé en ce que** la première forme d'onde est composée de N sinusoïdes de fréquences différentes émises simultanément, ledit dispositif comportant des moyens de traitement calculant les phases différentielles associées à chaque couple de sinusoïdes constitué parmi les N sinusoïdes émises et effectuant une levée d'ambiguïté en distance à partir de ces phases différentielles.

6. Dispositif radar selon l'une quelconque des revendications précédentes, **caractérisé en ce que** les impulsions (51, 52, 53, 54) de la deuxième forme d'onde sont codées en fréquence (F'1, F'2, F'3, F'4).

7. Dispositif radar selon la revendication 6, **caractérisé en ce qu'**une récurrence comporte une suite d'impulsions (51, 52, 53, 54) codées chacune selon une fréquence distincte (F'1, F'2, F'3, F'4).

8. Dispositif radar selon la revendication 7, **caractérisé en ce que** la durée de récurrence (Tr) est adaptée en permanence en fonction de la vitesse du porteur (1).

9. Dispositif radar selon l'une quelconque des revendications 7 ou 8, **caractérisé en ce que** la durée de récurrence (Tr) est adaptée en permanence en fonction du temps de réaction du porteur pour éviter une collision avec la cible.

10. Dispositif radar selon l'une quelconque des revendications précédentes, **caractérisé en ce que** l'émission étant réalisée sur un ou plusieurs faisceaux fixes, la réception s'effectue en formation de faisceau par le calcul.

11. Dispositif radar selon l'une quelconque des revendications précédentes, **caractérisé en ce que** l'émission de N sinusoïdes simultanées est effectuée par N amplificateurs affecté chacun à une sinusoïde .

12. Dispositif selon la revendication 11, **caractérisé en ce que** chaque amplificateur est relié à une antenne d'émission distincte.

## Claims

1. A radar device for detecting airborne targets (2), said device being carried by an aircraft (1) and comprising means for transmitting a hyper frequency wave towards a target (2), said wave (22, 45, 51, 52, 53, 54) having a double form, a first waveform (22, 45) being composed of at least two sinusoids (221, 222) of different frequencies (F1, F2) that are simultaneously transmitted, said radar comprising reception circuits receiving the signals that are reflected by the target and analysis means for detecting the target on the basis of the received signals, **characterised in that** the second waveform is of the pulse type (51, 52, 53, 54), the transmitted waveform depending on the relative speed of the target (2) relative to the carrier and the absolute speed of the carrier (1).

2. The radar device according to claim 1, **characterised in that** the first waveform (22, 45) is transmitted when the relative speed of the target (2) is greater than the absolute speed of the carrier (1).

3. The radar device according to claim 1, **characterised in that** the second waveform (51, 52, 53, 54) is transmitted when the relative speed of the target (2) is less than the absolute speed of the carrier (1).

**4.** The radar device according to any one of the preceding claims, **characterised in that** the first waveform uses a number N of sinusoids of different frequencies, the transmitted wave being composed of a pair of two simultaneously transmitted sinusoids, the pairs of sinusoids being sequentially modified, said device comprising processing means carrying out a remote ambiguity removal on the basis of differential phases that are associated with the pairs of sinusoids.

**5.** The radar device according to any one of claims 1 to 3, **characterised in that** the first waveform is composed of N sinusoids of different frequencies that are simultaneously transmitted, said device comprising processing means that compute the differential phases that are associated with each pair of sinusoids constituted from the N transmitted sinusoids and carrying out a remote ambiguity removal on the basis of said differential phases.

**6.** The radar device according to any one of the preceding claims, **characterised in that** the pulses (51, 52, 53, 54) of the second waveform are frequency coded (F'1, F'2, F'3, F'4).

**7.** The radar device according to claim 6, **characterised in that** a recurrence comprises a set of pulses (51, 52, 53, 54) each coded according to a distinct frequency (F'1, F'2, F'3, F'4).

**8.** The radar device according to claim 7, **characterised in that** the duration of recurrence (Tr) is continuously adapted as a function of the speed of the carrier (1).

**9.** The radar device according to claim 7 or 8, **characterised in that** the duration of recurrence (Tr) is continuously adapted as a function of the reaction time of the carrier for avoiding a collision with the target.

**10.** The radar device according to any one of the preceding claims, **characterised in that**, the transmission being carried out on one or more fixed beams, the reception is carried out by beamforming calculation.

**11.** The radar device according to any one of the preceding claims, **characterised in that** the simultaneous transmission of N sinusoids is carried out by N amplifiers each assigned to one sinusoid.

**12.** The device according to claim 11, **characterised in that** each amplifier is connected to a distinct transmission antenna.

**Patentansprüche**

**1.** Radarvorrichtung zur Erkennung von Luftzielen (2), wobei sich die Vorrichtung auf einem Luftfahrzeug (1) befindet und Mittel zum Senden einer Hyperfrequenzwelle zu einem Ziel (2) umfasst, wobei die Welle (22, 45, 51, 52, 53, 54) eine Doppelform hat, wobei sich eine erste Wellenform (22, 45) aus wenigstens zwei gleichzeitig gesendeten Sinusoiden (221, 222) mit unterschiedlichen Frequenzen (F1, F2) zusammensetzt, wobei das Radar Empfangsschaltungen, die die vom Ziel reflektierten Signale empfangen, sowie Analysemittel zum Erkennen des Ziels auf der Basis der empfangenen Signale umfasst, **dadurch gekennzeichnet, dass** die zweite Wellenform vom Impulstyp (51, 52, 53, 54) ist, wobei die gesendete Wellenform von der relativen Geschwindigkeit des Ziels (2) relativ zum Träger und der absoluten Geschwindigkeit des Trägers (1) abhängig ist.

**2.** Radarvorrichtung nach Anspruch 1, **dadurch gekennzeichnet, dass** die erste Wellenform (22, 45) gesendet wird, wenn die relative Geschwindigkeit des Ziels (2) höher ist als die absolute Geschwindigkeit des Trägers (1).

**3.** Radarvorrichtung nach Anspruch 1, **dadurch gekennzeichnet, dass** die zweite Wellenform (51, 52, 53, 54) gesendet wird, wenn die relative Geschwindigkeit des Ziels (2) niedriger ist als die absolute Geschwindigkeit des Trägers (1).

**4.** Radarvorrichtung nach einem der vorherigen Ansprüche, **dadurch gekennzeichnet, dass** die erste Wellenform eine Anzahl N von Sinusoiden mit unterschiedlichen Frequenzen benutzt, wobei sich die gesendete Welle aus einem Paar von zwei gleichzeitig gesendeten Sinusoiden zusammensetzt, wobei das Sinusoidpaar sequentiell modifiziert wird, wobei die Vorrichtung Verarbeitungsmittel zum Durchführen einer Fernambiguitätsbeseitigung auf der Basis von mit den Sinusoidpaaren assoziierten differentiellen Phasen umfasst.

**5.** Radarvorrichtung nach einem der Ansprüche 1 bis 3, **dadurch gekennzeichnet, dass** sich die erste Wellenform aus N gleichzeitig gesendeten Sinusoiden mit unterschiedlichen Frequenzen zusammensetzt, wobei die Vorrichtung Verarbeitungsmittel umfasst, die die differentiellen Phasen berechnen, die mit jedem Sinusoidpaar assoziiert sind, das aus den N gesendeten Sinusoiden besteht, und eine Fernambiguitätsbeseitigung auf der Basis der Differenzphasen durchführen.

6.  Radarvorrichtung nach einem der vorherigen Ansprüche, **dadurch gekennzeichnet, dass** die Impulse (51, 52, 53, 54) der zweiten Wellenfrom frequenzcodiert (F'1, F'2, F'3, F'4) sind.

7.  Radarvorrichtung nach Anspruch 6, **dadurch gekennzeichnet, dass** eine Rekurrenz einen Satz von Impulsen (51, 52, 53, 54) umfasst, die jeweils gemäß einer separaten Frequenz (F'1, F'2, F'3, F'4) codiert sind.

8.  Radarvorrichtung nach Anspruch 7, **dadurch gekennzeichnet, dass** die Rekurrenzdauer (Tr) kontinuierlich in Abhängigkeit von der Geschwindigkeit des Trägers (1) adaptiert wird.

9.  Radarvorrichtung nach Anspruch 7 oder 8, **dadurch gekennzeichnet, dass** die Rekurrenzdauer (Tr) kontinuierlich in Abhängigkeit von der Reaktionszeit des Trägers adaptiert wird, um eine Kollision mit dem Ziel zu vermeiden.

10. Radarvorrichtung nach einem der vorherigen Ansprüche, **dadurch gekennzeichnet, dass**, da das Senden auf einem oder mehreren festen Strahlen erfolgt, der Empfang durch Berechnung der Strahlformung erfolgt.

11. Radarvorrichtung nach einem der vorherigen Ansprüche, **dadurch gekennzeichnet, dass** das gleichzeitige Senden von N Sinusoiden mit N Verstärkern erfolgt, die jeweils einem Sinusoid zugeordnet sind.

12. Vorrichtung nach Anspruch 11, **dadurch gekennzeichnet, dass** jeder Verstärker mit einer eigenen Sendeantenne verbunden ist.

**FIG.1**

**FIG.2**

Raies à $F_1 = F0 + \Delta F/2$
et $F_2 = F0 - \Delta F/2$

31

Générateur sinusoïdal CW basse fréquence $\Delta f/2$

$\Delta F/2$

32

⊗

F0

Pilote hyper fréquence F0

33

34

HPA

35

F0

Démodulation I et Q

38

37

LNA

36

381

382

39

CAN

30

Détection et estimation vitesse et distance

FFT

40

# FIG.3

Ecart de
fréquence

$\Delta F_b$

$\Delta F_c$

$\Delta F_a$

$\Delta F_a$

$\Delta F_b$

$-\Delta F_c$

41

t

## FIG.4a

A

15

10

5

0

-5

45

42

43

44

t

## FIG.4b

**FIG.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3787853 A

- FR 0900241